# EUROPEAN PATENT SPECIFICATION

(11) **EP 0 489 529 B1**
(45) Date of publication and mention of the grant of the patent: **15.07.1998**
(21) Application number: 91310894.0
(22) Date of filing: 26.11.1991
(51) Int. Cl.: H01C 7/02, H01C 10/06

(54) **Resistor device for blower motor**
Widerstandseinrichtung für einen Gebläse-Motor
Dispositif à résistances pour moteur à ventilateur

(30) Priority: 26.11.1990 JP 124550/90 U; 30.03.1991 JP 44554/91 U
(43) Date of publication of application: 10.06.1992
(73) Proprietor: PACIFIC ENGINEERING CO, LTD., Ogaki-shi Gifu-ken (JP)
(72) Inventor: Murakami, Iwao, Yoro-gun, Gifu-ken (JP)
(74) Representative: Senior, Alan Murray

(56) References cited:
- EP-A- 237 228
- EP-A- 363 191
- FR-A- 2 392 521

## Description

The present invention relates to a control circuit including a resistor device for controlling the rotational speed of a blower motor used in an air conditioning system, for instance one installed in an automobile.

Resistor devices such as mentioned above are disposed around an outlet of a blower of an air conditioning system of an automobile so that the resistor device is cooled by the wind from the blower.

A resistor device of this type is disclosed in Japanese Patent Publication No. 57-45041 (Kokoku)/55-155454 (Kokai) and in Publication No. 57-32482 (Kokoku)/50-102859 (Kokai) in which a semiconductor element of positive temperature coefficient (referred to as PCT element hereinafter) is used as the resistor element of the device. The PTC element has such a characteristic, as widely known, that the resistance thereof rises abruptly and greatly when the ambient temperature exceeds a predetermined value (Curie temperature).

As a result, when the PTC element is not appropriately cooled when the current is applied thereto or when an excessive current over an allowable extent is applied to the PTC element, the temperature of the PTC element is raised gradually first and when the temperature reaches the Curie temperature, the resistance of the element increases suddenly very largely so that the current is controlled and the temperature is maintained below the Curie temperature. Accordingly, the PTC element is very useful for proper operation of the motor and avoiding fires in the automobile.

However, according to the above mentioned Japanese patent publications (57-45041 and 57-32482) aiming at the safety structure for the motor and vehicle, the resistor device is arranged in such a manner that a plurality of ring-shaped PTC element plates and a plurality of terminal plates having a center hole are disposed alternately and combined together by bolt inserted through the center holes of the plates and secured together by a nut screwed on the bolt. In this structure, it is necessary to dispose an insulation spacer between the bolt and the terminal plates to avoid contact and short circuit between the bolt and the terminal plates. As a result, the structure is complicated and proper adjustment of the torque for fastening the nut is necessitated, which makes the assembling work troublesome and the cost of the device high.

The present invention was made considering the above mentioned problems of the related art.

It is therefore an aim of the present invention to provide a resistor device for a blower motor wherein the number of parts is reduced and the resistance against the draught from the blower is decreased, which makes it possible to simplify the structure, and in particular reduce the thickness of the device and raise its reliability.

Another aim of the present invention is to provide a resistor device for blower motor wherein the productivity of the device is raised and the maintenance of the device can be conveniently carried out.

Also, it is required that the structure of the resistor device be compact so as to reduce the airflow loss of the blower as much as possible.

Still another aim of the present invention is to provide a resistor device for blower motor which satisfies the requirements mentioned above.

According to the present invention there is provided a blower motor control circuit including a resistor device to be placed in the air flow from the blower, the resistor device comprising:
a plurality of PTC element plates having two side surfaces and being disposed side by side substantially in the same plane, each element plate having an electrode formed on each of said side surfaces thereof; and
a plurality of terminal plates sandwiching said PTC element plates on both side surfaces thereof.

In a preferred embodiment of the present invention, the plurality of terminal plates include a plate comprising an electrode disposed spanning between a plurality of PTC element plates.

In another preferred embodiment of the present invention, the plurality of PTC element plates are connected sequentially in series through the terminal plates disposed in both side surfaces of the PTC element plates.

In a further preferred embodiment of the present invention, the terminal plate has one or more electrode terminal portions projecting therefrom.

In a still further preferred embodiment of the present invention, the PTC element plates sandwiched by the terminal plates are attached to a base holder in such a way that the projecting terminal portions of the terminal plates are inserted into through-holes formed in the base holder corresponding to the terminal portions.

In a still further preferred embodiment of the present invention, the PTC element plates and terminal plates are held and clamped by an elastic clip unit.

In a still further preferred embodiment of the present invention, the PTC element plates and terminal plates are held and clamped by a rivet means.

In a still further preferred embodiment of the present invention, the PTC element plates and terminal plates are held and clamped by a rectangular frame unit.

In the arrangement of the present invention mentioned above, a plurality of PTC elements can be held without using screws or an insulation bush by such a way that the PTC elements are disposed side by side in one plane and sandwiched by a pair of terminal plates, which makes it possible to realise a resistor device having a regular thickness irrespective of the number of PTC elements.

Also, in some embodiments of device of the present invention, a pair of terminal plates and the PTC element can be combined together in such a way that an end electrode of one of the terminal plate is connected in series to the other end electrode of the other terminal plate through the other electrodes of the terminal plates and the PTC elements sandwiched between the terminal plates. With such an arrangement, the number of resistance values obtained from the resistor device becomes the total combination number of any two electrode terminals.

Therefore, it is an advantage that a lot of different resistance values can be easily obtained from the resistor device.

Another advantage of the present invention is that the structure becomes compact as a whole, which reduces the airflow loss of the blower and raises the current capacity of the blower motor according as the cooling effect is increased.

Further advantages are that the base holder structure can also be simplified, that the number of parts can be reduced, and that the device can be easily and reliably assembled, as a result of which the industrial applicability of the device can be raised.

It is to be noted that the term "terminal plate" used in the present invention includes not only a plate made from a conductive member such as metal which forms an electrode but also a structure comprising an electrical insulating plate having metal electrodes formed thereon.

The present invention will be further described hereinafter with reference to the following description of exemplary embodiments and the accompanying drawings, in which:-
Figure 1 is an exploded view of an embodiment of the resistor device in accordance with the present invention;
Fig.2 is a perspective view of an assembled state of the resistor device of Fig.1;
Fig.3 is a sectional view of another embodiment of the present invention wherein the arrangement of the PTC elements with respect to the terminal plates is different from that of the embodiment of Fig.1;
Fig.4 is an exploded view of still another embodiment of the resistor device in accordance with the present invention;
Fig.5 is a perspective view of an assembled state of the resistor device of Fig.4;
Fig.6 is a partial perspective view of rivet means for combining and securing the terminal plates and the PTC elements;
Fig.7 is a partial perspective view of frame means as another example for combining and securing the terminal plates and the PTC elements;
Fig.8 is an exploded view of still another embodiment of the resistor device in accordance with the present invention; and
Fig.9 is a sectional view of a further embodiment of the present invention wherein the arrangement of the PTC elements with respect to the terminal plates is different from those of the other embodiments.

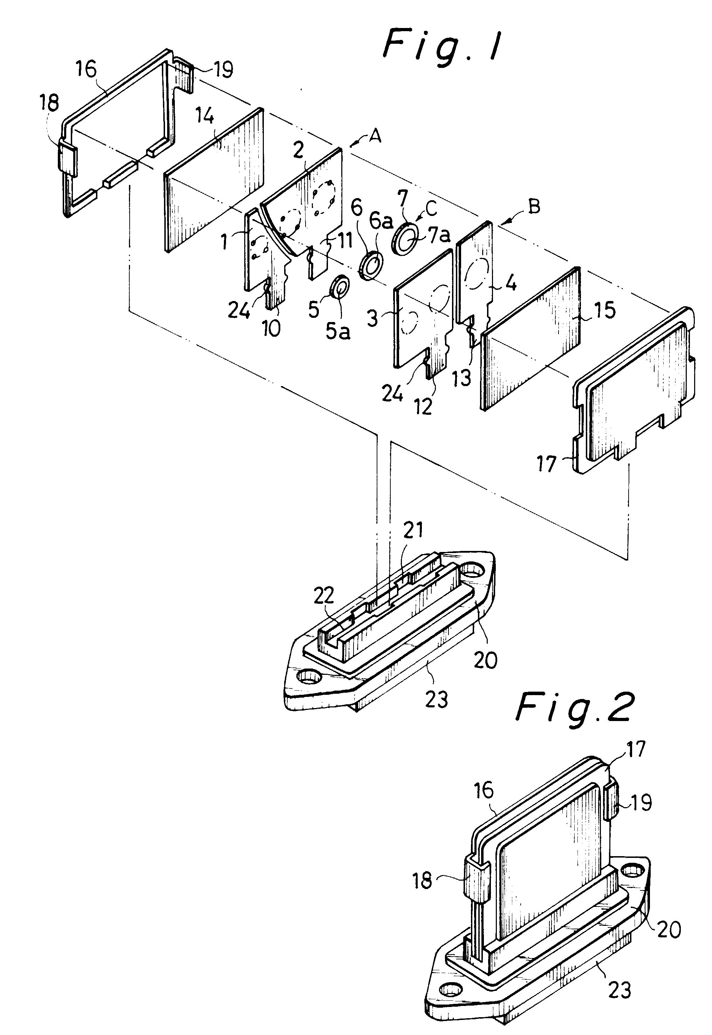

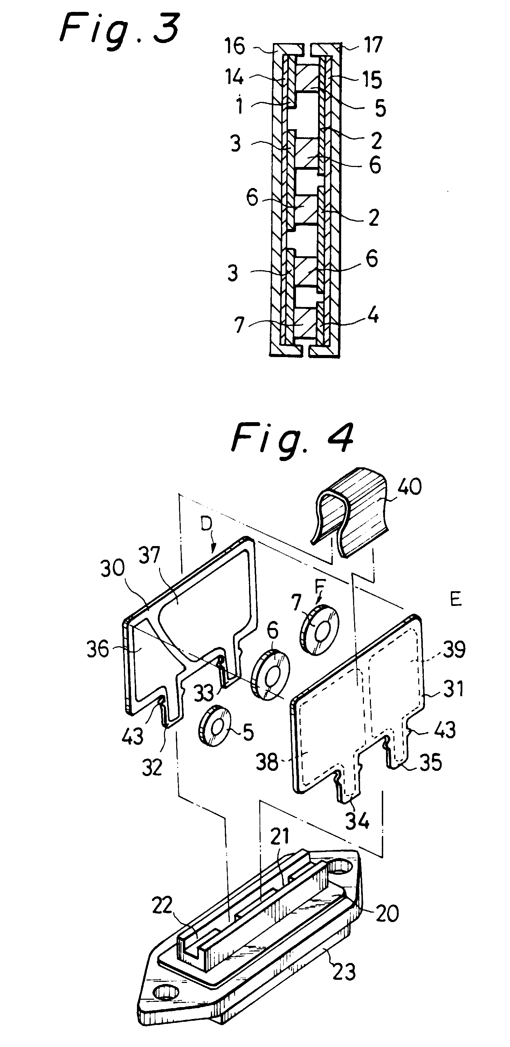

Fig.1 illustrates an embodiment of the present invention in an exploded view. A PTC element group C comprises a plurality of PTC elements 5, 6 and 7, each element having a desired resistance value and current capacity depending on the requirement for use. The PTC elements have a regular thickness, respectively. Also, on each side surface of the PTC elements 5, 6 and 7 is formed an ohmic electrode 5a, 6a, 7a, made from silver paste, for instance.

The PTC element is made from a ceramic member composed of BaTiO₃ or compound comprising BaTiO₃ or the component elements of the compound or the compound of the same group or series of BaTiO₃ or other ceramic or plastic members.

The "PTC element" hereinafter refers to the PTC plate having the electrodes formed on both sides thereof.

The PTC elements 5, 6 and 7 are disposed side by side in one plane. A terminal plate group A comprising two terminal plates 1 and 2 is disposed on one side of the PTC elements 5, 6 and 7. Also, another terminal plate group B comprising two terminal plates 3 and 4 is disposed on the other side of the PTC elements 5, 6 and 7. Each of the terminal plates 1 to 4 has a terminal 10, 11, 12, 13 formed at the lower edge projecting downward therefrom. The PTC element 5 is sandwiched by the terminal plates 1 and 3. The PTC element 6 is sandwiched by the terminal plates 2 and 3. And the PTC element 7 is sandwiched by the terminal plates 2 and 4.

An electric insulation film 14 is disposed in the outside of the terminal plate group A. Similarly, an insulation film 15 is disposed in the outside of the terminal plate group B. The vertically layered structure of the PTC elements, terminal plates and insulation films is sandwiched by covers 16 and 17 which are made from aluminum, for instance, which is heat radiative. The covers 16 and 17 are combined and secured together by ears 18 and 19 which clamp the covers from outside thereof, as illustrated in Fig.2, so that the PTC elements are held in a state being pressed by the terminal plates from both sides thereof.

An elastic clip means may be used to clamp the covers together instead of the ears 18 and 19.

The combined structure constituted from the PTC elements, terminal plates and insulation films sandwiched between the covers 16 and 17 is installed in a base holder 20 in such a way that each of the projecting terminals 10 to 13 of the terminal plates 1 to 4 is inserted into a through-hole 21 which is formed in a guide groove 22 of the base holder 20 at a position corresponding to each terminal.

The base holder 20 is made from synthetic resin which is heat resistant and electric insulating. The base holder 20 has the guide groove 22 formed along the center line thereof, as illustrated in Fig.1. Through-holes 21 are formed in the groove 22 corresponding to the terminals 10 to 13 of the terminal plates 1 to 4, respectively. A connector housing 23 is formed in the lower side of the base holder 20 surrounding the through-holes 21 as a whole.

Each of the terminals 10 to 13 has a small projection 24 for engagement formed on each of lateral edges thereof so as to intrude into the inner surface of the through-hole wall to prevent each terminal from being slipped out from the through-hole.

As mentioned above, the PTC elements 5, 6 and 7 are disposed side by side in a same plane and interposed between a pair of terminal plate groups A and B which are sandwiched between the covers 16 and 17 through the insulation films 14 and 15 disposed in the outside of each terminal group. In this state, the covers 16 and 17 are combined and secured together by the ears 18 and 19 which are folded to clamp the covers together, as illustrated in Fig.2. The sandwiched structure of the PTC elements covered by the covers 16 and 17 is attached to the base holder 20 in such a way that the terminals of the terminal plates are inserted into the through-holes 21 of the base holder 20 whereby the small projections 24 of each terminal engage and intrude into the inner wall of the through-hole so that the terminal is prevented from slipping out from the through-hole. Thus, the sandwiched structure is reliably assembled with the base holder.

In accordance with the embodiment of the present invention mentioned above, six different resistance values can be obtained from the combination of any two of four terminals 10 to 13.

The above mentioned embodiment refers to the arrangement wherein three PTC elements 5, 6 and 7 are sandwiched between two terminal plate groups A and B. However, the number of the PTC elements is not limited to three. Any number of the PTC elements can be interposed between the terminal plates.

Fig.3 illustrates another embodiment of the present invention wherein five PTC elements 5, 6, 6, 6 and 7 are sandwiched between six terminal plates, disposing three plates 1, 3 and 3 on one side of the PTC elements and disposing the other three plates 2, 2 and 4 on the other side of the PTC elements. In this arrangement, the terminal plate 1 disposed at an end of one of the sides of the PTC elements is connected to the terminal plate 4 disposed at the other end to the other side of the PTC elements in series through the PTC element 5, the terminal plate 2, the PTC element 6, the terminal plate 3, the PTC element 6, the terminal plate 2, the PTC element 6, the terminal plate 3 and the PTC element 7. In accordance with the arrangement mentioned above, fifteen different resistance values can be obtained from the combination number of any two of six terminals.

It is to be noted that the projecting terminal is not necessarily formed to every terminal plate but it may be formed only to necessary plates. Also, the shape of the terminal is not limited to that illustrated in the drawings.

Fig.4 illustrates another embodiment of the present invention. Reference F designates a group of PTC elements 5, 6 and 7, each having a size corresponding to a required resistance value and current capacity as in the case of the embodiment of Fig.1.

Numeral 30 designates an electric insulation plate made from alumina and having protruding terminal portions 32 and 33 formed at the lower edge thereof extending downward therefrom. On one of the side surfaces of the insulation plate, electrode members 36 and 37 are coated by printing conductive ink, for instance, extending continuously into the terminal protrusions 32 and 33, respectively. The electrode members 36 and 37 are electrically separated from each other. The insulation plate 30 and the electrodes 36 and 37 constitute a terminal plate designated by reference D as a whole. In this particular embodiment, the electrode member 36 occupies about one third of the plate 30 in the left side thereof while the other electrode member 37 occupies about two thirds of the plate 30 in the right side thereof.

Numeral 31 designates an electric insulation plate made from the same material as the plate 30 mentioned above and having also protruding portions 34 and 35 for terminal extending from the lower edge thereof. Also, electrode members 38 and 39 are similarly formed on the surface of the plate 31 facing to the electrodes of the plate 30. The electrodes 38 and 39 are electrically independent from each other and extend into the protrusions 34 and 35, respectively. The insulation plate 31 and the electrode members 38 and 39 constitute a terminal plate designated by reference E as a whole. The electrode member 38, in this particular embodiment, occupies about two thirds of the plate 31 in the left side thereof seen from the back side thereof while the electrode member 39 occupies about one third of the plate 31 in the right side thereof.

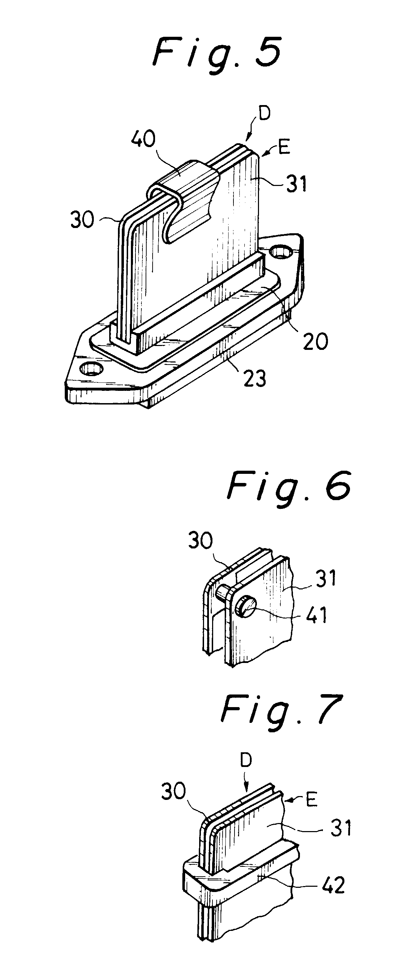

The terminal plates D and E are disposed in such a way that the electrode members thereof face to each other and that the PTC elements 5, 6 and 7 are interposed between the plates D and E in a state of being arranged side by side in a same plane. The PTC element 5 is disposed between the electrodes 36 and 38. The PTC element 6 is disposed between the electrodes 37 and 38. And the PTC element 7 is disposed between the electrodes 37 and 39. In this state, the terminal plates D and E are combined and secured together by an elastic clip 40 as illustrated in Fig.5.

It is to be noted that the two terminal plates D and E may be combined and secured together by a rivet 41 at each corner thereof, as illustrated in Fig.6, instead of the clip 40 mentioned above. Or otherwise, a rectangular frame 42 may be used to combine and secure the two terminal plates D and E, by inserting the plates into the frame 42, as illustrated in Fig.7.

In the above mentioned state where the three PTC elements 5, 6 and 7 are sandwiched and pressed by four electrode members 36 to 39, the combined structure is installed into the base holder 20 in such a way that the terminal protrusions 32 to 35 projecting from the lower edges of the plates D and E are inserted into through-holes 21 formed in the base holder 20 corresponding to the protrusions 32 to 35, respectively. The base holder is formed substantially in the same shape as that of the embodiment of Fig.1.

It is to be noted that numeral 43 is a small projection for engagement formed on each lateral side edge of the terminal protrusion in order to engage and intrude into the inner wall of the through-hole 21 to prevent the protrusion from being slipped out from the through-hole 21.

As mentioned above, the PTC elements 5, 6 and 7 are disposed side by side in a same plane and sandwiched between a pair of terminal plates D and E which have electrode members 36, 37, 38 and 39 in the inner side thereof, respectively. In this state, the PTC elements are held and pressed from both outer side thereof by the plates D and E with the use of any appropriate means, such as clip means, for instance, as in the case of Fig.5. The sandwich structure is installed into the base holder 20 by inserting the protruding terminal portions 32 to 35 into the through-holes 21 formed in the base holder 20 so that the sandwich structure is reliably assembled with the base holder by the function of the small projections formed on the terminal portion, as mentioned above.

It is to be noted that in the above mentioned embodiment of the present invention, as in the case of the preceding embodiments, the number of PTC elements and/or electrode members are not limited to that illustrated. Also, the electrode members may be formed by affixing sheet-like electrodes to the plate by an appropriate bonding means, instead of printing the electrodes with the use of conductive ink.

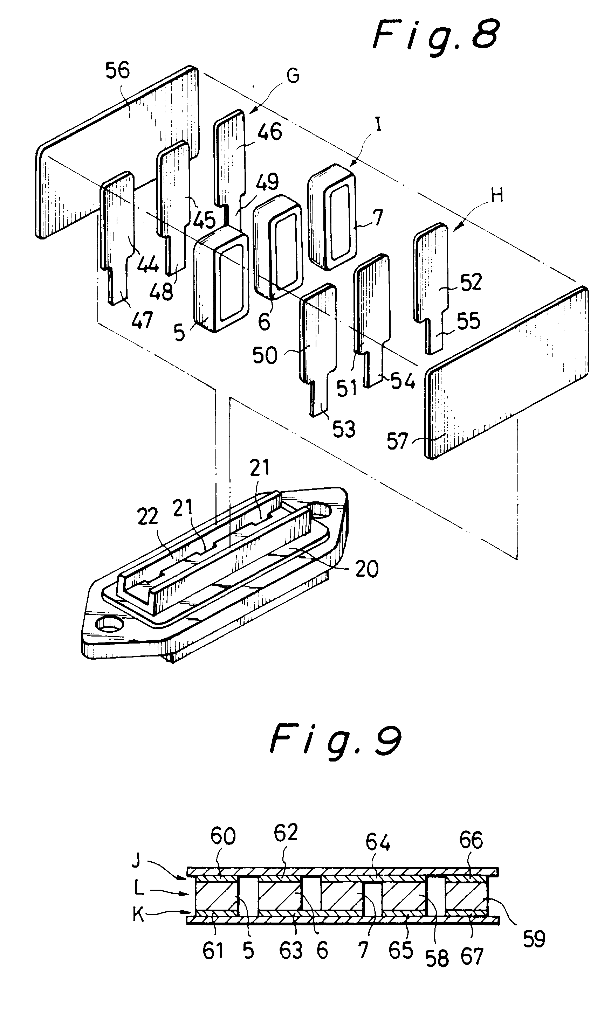

Fig.8 illustrates a still further embodiment of the resistor device in accordance with the present invention in an exploded view thereof. A PTC element group I is constituted from three PTC elements 5, 6 and 7, in this particular embodiment, each element having a size corresponding to a required resistance and current capacity, as in the case of embodiment of Fig.1.

Numerals 44, 45 and 46 designate terminal plates constituting a terminal plate group G which is disposed facing to the front side of the PTC elements 5, 6 and 7. Each of the terminal plates has a terminal portion 47, 48, 49 protruding from the lower edge thereof. Numerals 50, 51 and 52 designate terminal plates similarly constituting a group H of terminal plates disposed facing to the rear side of the PTC elements 5, 6 and 7. The terminal plates 50 to 52 also have protruding terminal portions 53, 54 and 55, respectively, formed at the lower edges thereof.

In this embodiment, the device structure is essentially arranged in such a way that each of the plurality of PTC elements which are disposed side by side in a same plane is sandwiched by a pair of terminal plates arranged individually for each element. Electric insulation plates 56 and 57 are disposed in the outer sides of the terminal plates, respectively. The plates 56 and 57 are combined and secured together sandwiching the PTC elements and terminal plates therebetween by an appropriate clamping means such as clip means 40 of Fig.5, rivet means 41 of Fig.6 or rectangular frame means 42 of Fig.7. And in the state where the group I of PTC elements is sandwiched and pressed by the pair of terminal plate groups G and H, the terminal protrusions 47 to 49 and 53 to 55 formed at the lower edges of the terminal plates are inserted into through-holes 21 formed in the base holder 20 corresponding to the protrusions. The sandwich structure is held and secured to the base holder by an appropriate means to form an assembly of the resistor device.

Fig.9 illustrates a still further embodiment of the resistor device in accordance with the present invention along a cross section thereof. A PTC element group L is constituted from five PTC elements 5, 6, 7, 58 and 59, disposed side by side in a same plane, each of which elements has a size corresponding to a required resistance and current capacity, as in the case of the embodiment of Fig.1. In this embodiment of Fig.9, the arrangement of terminal plates is featured in that the plates press and sandwich the PTC elements from both sides thereof in such a way that the PTC element 5 is held by terminal plates 60 and 61 which are independent from the other terminal plates, that the PTC element 6 is held by an independent terminal plate 62 disposed in one side thereof and a terminal plate 63 disposed in the opposite side thereof covering also the adjacent PTC element 7, that the element 7 is held by the plate 63 and a terminal plate 64 disposed in the opposite side of the plate 63 which plate 64 spans between the elements 7 and 58, that the PTC element 58 is held by the terminal plate 64 and an independent terminal plate 65, and that the PTC element 59 is held by independent terminal plates 66 and 67 from both sides thereof.

In accordance with the embodiment of Fig.9 mentioned above, from the combination of five PTC elements and eight terminal plates, it becomes possible to obtain various different resistance values in a manner different from those of the preceding embodiments mentioned before.

It is to be noted that in the illustrated embodiments mentioned above, the PTC elements have a same thickness for every embodiment. However, the thickness and size of the PTC elements are not necessarily the same in the same group of the elements. If a PTC element of different thickness is included in a group of PTC elements, the thickness of the insulation plate disposed in the outside of the terminal plates is adjusted to compensate for the unevenness of thickness so as to obtain a flat outer plane of the resistor device.

It is also to be noted that the shape of the PTC element is not limited to the circular shape or rectangular shape as illustrated in the drawings.

## Claims

1. A blower motor control circuit including a resistor device to be placed in the air flow from the blower, the resistor device comprising:
a plurality of PTC element plates (5,6,7) having two side surfaces and being disposed side by side substantially in the same plane, each element plate having an electrode (5a,6a,7a) formed on each of said side surfaces thereof; and
a plurality of terminal plates (1 to 4) sandwiching said PTC element plates on both side surfaces thereof.

2. A control circuit according to claim 1, wherein said plurality of terminal plates includes a plate (2,3) forming an electrode disposed so as to span between a plurality of PTC element plates.

3. A control circuit according to claim 1 or 2, wherein said plurality of PTC element plates are connected in series through said terminal plates disposed against both side surfaces of the PTC element plates.

4. A control circuit according to claim 1, 2 or 3, wherein each terminal plate has one or more terminal portions (10,11,12,13) projecting therefrom.

5. A control circuit according to claim 4, wherein said PTC element plates sandwiched by said terminal plates are attached to a base holder (20) in such a way that said projecting terminal portions of said terminal plates are inserted into corresponding through-holes (21) formed in said base holder.

6. A control circuit according to claim 5, wherein said PTC element plates and terminal plates are held and clamped by an elastic clip means (18,19,40).

7. A control circuit according to claim 5, wherein said PTC element plates and terminal plates are held and clamped by a rivet means (41).

8. A control circuit according to claim 5, wherein said PTC element plates and terminal plates are held and clamped by a rectangular frame means (42).

9. A control circuit according to any one of the preceding claims wherein there are two terminal plates (30,31), each comprising an electrically insulating plate having conductive electrodes (36 to 39) thereon.

## Patentansprüche

1. Gebläsemotor-Steuerschaltung mit einer Widerstandseinrichtung, die im Luftstrom von dem Gebläse anzuordnen ist, wobei die Widerstandseinrichtung
eine Vielzahl von PTC-Element-Platten (5,6,7), welche zwei Seitenflächen aufweisen und welche Seite an Seite im wesentlichen in derselben Ebene angeordnet sind, wobei jede Element-Platte eine auf jeder ihrer genannten Seitenflächen gebildete Elektrode (5a, 6a, 7a) aufweist,
und eine Vielzahl von Anschlußplatten (1 bis 4) umfaßt, welche die genannten PTC-Element-Platten auf deren beiden Seitenflächen einklemmen.

2. Steuerschaltung nach Anspruch 1, wobei die genannte Vielzahl der Anschlußplatten eine Platte (2,3) umfaßt, welche eine Elektrode bildet, die derart angeordnet ist, daß sie sich zwischen einer Vielzahl von PTC-Element-Platten erstreckt.

3. Steuerschaltung nach Anspruch 1 oder 2, wobei die genannte Vielzahl der PTC-Element-Platten über die genannten Anschlußplatten in Reihe geschaltet sind, die an beiden Seitenflächen der PTC-Element-Platten angeordnet sind.

4. Steuerschaltung nach Anspruch 1, 2 oder 3, wobei jede Anschlußplatte einen oder mehrere von ihr abstehende Anschlußbereiche (10,11,12,13) aufweist.

5. Steuerschaltung nach Anspruch 4, wobei die durch die genannten Anschlußplatten eingeklemmten bzw. zusammengeschichteten PTC-Element-Platten an einem Grundhalter (20) derart angebracht sind, daß die vorstehenden Anschlußbereiche der genannten Anschlußplatten in entsprechende Durchgangslöcher (21) eingeführt sind, die in dem genannten Grundhalter gebildet sind.

6. Steuerschaltung nach Anspruch 5, wobei die genannten PTC-Element-Platten und Anschlußplatten durch eine elastische Klemmeinrichtung (18,19,40) festgehalten und -geklemmt sind.

7. Steuerschaltung nach Anspruch 5, wobei die genannten PTC-Element-Platten und Anschlußplatten durch eine Nieteinrichtung (41) festgehalten und -geklemmt sind.

8. Steuerschaltung nach Anspruch 5, wobei die genannten PTC-Element-Platten und Anschlußplatten durch eine rechteckige Rahmeneinrichtung (42) festgehalten und -geklemmt sind.

9. Steuerschaltung nach irgendeinem der vorhergehenden Ansprüche, wobei zwei Anschlußplatten (30,31) vorgesehen sind, deren jede eine elektrische Isolierplatte mit darauf vorhandenen leitenden Elektroden (36 bis 39) aufweist.

## Revendications

1. Circuit de commande de moteur de ventilateur comprenant un dispositif à résistances devant être placé dans le flux d'air provenant du ventilateur, le dispositif à résistances comprenant :
une pluralité de plaques à éléments à coefficient de température positif (5, 6, 7) ayant deux surfaces latérales et étant disposées côte à côte sensiblement dans le même plan, chaque plaque à éléments ayant une électrode (5a, 6a, 7a) formée sur chacune desdites surfaces latérales ; et
une pluralité de plaques à bornes (1 à 4) prenant en sandwich lesdites plaques à éléments à coefficient de température positif sur leurs deux surfaces latérales.

2. Circuit de commande selon la revendication 1, dans lequel ladite pluralité de plaques à bornes comporte une plaque (2, 3) formant une électrode disposée de façon à s'étendre entre une pluralité de plaques à éléments à coefficient de température positif.

3. Circuit de commande selon la revendication 1 ou 2, dans lequel ladite pluralité de plaques à éléments à coefficient de température positif sont connectées en série par l'intermédiaire desdites plaques à bornes disposées contre les deux surfaces latérales des plaques à éléments à coefficient de température positif.

4. Circuit de commande selon la revendication 1, 2 ou 3, dans lequel chaque plaque à bornes comporte une ou plusieurs parties formant bornes (10, 11, 12, 13) faisant saillie de celles-ci.

5. Circuit de commande selon la revendication 4, dans lequel lesdites plaques à éléments à coefficient de température positif prises en sandwich par lesdites plaques à bornes sont fixées à un support de base (20) de telle façon que lesdites parties formant bornes faisant saillie desdites plaques à bornes soient insérées dans des trous traversants (21) correspondants pratiqués dans ledit support de base.

6. Circuit de commande selon la revendication 5, dans lequel lesdites plaques à éléments à coefficient de températures positif et lesdites plaques à bornes sont maintenues et serrées par des moyens de pincement élastiques (18, 19, 40).

7. Circuit de commande selon la revendication 5, dans lequel lesdites plaques à éléments à coefficient de température positif et lesdites plaques à bornes sont maintenues et serrées par des moyens à rivets (41).

8. Circuit de commande selon la revendication 5, dans lequel lesdites plaques à éléments à coefficient de température positif et lesdites plaques à bornes sont maintenues et serrées par des moyens formant châssis rectangulaire (42).

9. Circuit de commande selon l'une quelconque des revendications précédentes, dans lequel il y a deux plaques à bornes (30, 31), chacune d'elles comprenant une plaque électriquement isolante sur laquelle se trouvent des électrodes conductrices (36 à 39).
